**Europäisches Patentamt**

**European Patent Office**

**Office européen des brevets**

(11) Veröffentlichungsnummer: **0 131 687**
A2

# (12) EUROPÄISCHE PATENTANMELDUNG

(21) Anmeldenummer: **84103407.7**

(22) Anmeldetag: **28.03.84**

(51) Int. Cl.⁴: **G 06 F 7/60**

(30) Priorität: **19.07.83 DE 3325886**

(43) Veröffentlichungstag der Anmeldung:
**23.01.85 Patentblatt 85/4**

(84) Benannte Vertragsstaaten:
**FR GB NL**

(71) Anmelder: **ROBERT BOSCH GMBH**
**Postfach 50**
**D-7000 Stuttgart 1(DE)**

(72) Erfinder: **Peuser, Sieghart, Ing.grad.**
**Mörchinger Strasse 40**
**D-1000 Berlin 37(DE)**

(74) Vertreter: **Schmidt, Hans-Ekhardt**
**Robert Bosch GmbH Geschäftsbereich Elektronik Patent-**
**und Lizenzabteilung Forckenbeckstrasse 9-13**
**D-1000 Berlin 33(DE)**

(54) **Digitale Schaltungsanordnung.**

(57) Es wird eine digitale Schaltungsanordnung vorgeschlagen, die zum Erzeugen einer von einer rechteckförmigen
Eingangsspannung ($U_E$) der Eingangsfrequenz ($f_E$) durch Versatz abgeleiteten Ausgangsspannung ($U_A$) der Ausgangsfrequenz ($f_A$) dient, wobei die Frequenzen ($f_E$, $f_A$) in einem keine
ganze Zahl ergebenden Verhältnis stehen. Die Eingangsfrequenz ($f_E$) wird um eine derartige Versatzfrequenz ($f_V$) verschoben, daß eine neue Frequenz $f_A = f_E - f_V$ entsteht. Die neue
Frequenz $f_A$ ist durch eine ganze Zahl n teilbar, so daß eine
gewünschte Ausgangsfrequenz $f_A{}^* = f_A/n$ durch Teilung abgeleitet werden kann. Die Schaltungsanordnung weist zwei
Speicherglieder (19, 25) auf, mit deren Hilfe der Phasensprung
der Ausgangsspannung ($U_A$) doppelt so häufig auftritt und
halb so groß ist wie bei den bisher verwendeten Schaltungsanordnungen.

10/83
EK/PLI Scht/Li
15. Juli 1983

ROBERT BOSCH GMBH, 7000 Stuttgart 1

## Digitale Schaltungsanordnung

### Stand der Technik

Die Erfindung geht von einer digitalen Schaltungsanordnung nach der im Oberbegriff des Anspruchs 1 angegebenen Gattung aus.

Es ist schon eine derartige digitale Schaltungsanordnung bekannt (H. Geschwinde, Einführung in die PLL-Technik, Vieweg, Braunschweig, 1978, Seiten 47 bis 51), bei der das Prinzip des Pulse swallowing angewendet wird. Jeweils eine Flanke einer ersten Rechteckspannung unterdrückt zwei Flanken einer zweiten Rechteckspannung. Dabei erfährt die zweite Rechteckspannung einen Phasensprung. Da das zweite Signal als Referenzfrequenz für einen Phasenvergleicher in einer PLL(Phase locked loop)-Schaltung dient, liefert dieser ein dem Phasensprung entsprechendes Korrektursignal. Mit einer Siebschaltung kann aus dem Korrektursignal eine Signalspannung erzeugt werden, die der mittleren Frequenz der zweiten Rechteckspannung entspricht und die eine Restwelligkeit entsprechend den Phasensprüngen hat.

### Vorteile der Erfindung

Die erfindungsgemäße Schaltungsanordnung mit den kennzeichnenden Merkmalen des Anspruchs 1 hat den Vorteil, daß der Phasensprung der Ausgangsspannung doppelt so häufig auftritt und halb so groß ist wie bei den bisher verwendeten Schaltungsanordnungen. Auf diese Weise läßt sich – eine geeignet dimensionierte Siebschaltung vorausgesetzt – eine erhebliche Verringerung der Restwelligkeit erzielen.

o o o

## Zeichnung

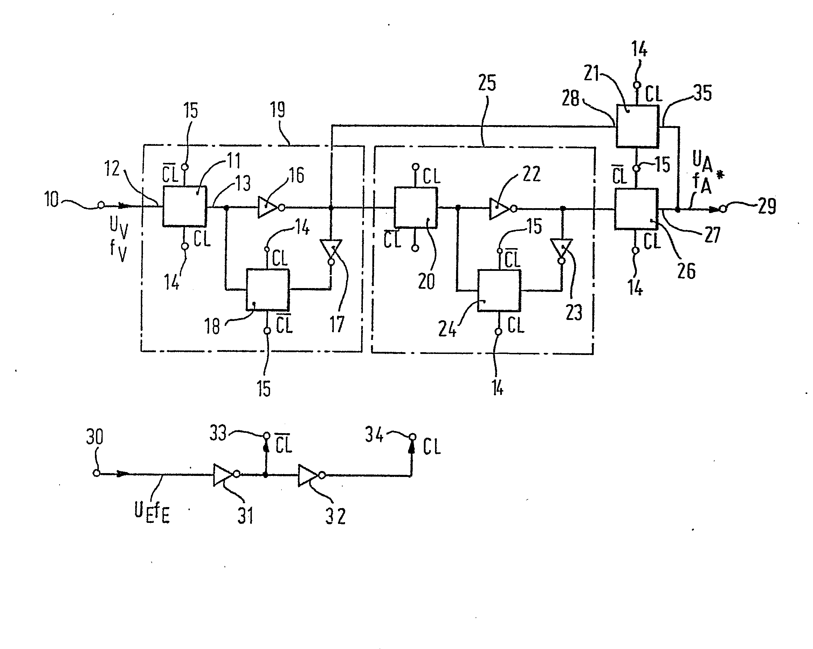

Ein Ausführungsbeispiel einer erfindungsgemäßen Schaltungsanordnung ist in der Zeichnung an Hand einer Figur dargestellt und in der nachfolgenden Beschreibung näher erläutert.

## Beschreibung der Erfindung

Eine erfindungsgemäße Schaltungsanordnung weist einen ersten Eingang 10 auf, der mit einem ersten Transmission-Gate 11 verbunden ist, das mit einem Eingang 12, einem Ausgang 13 und zwei Eingängen 14, 15 versehen ist. An das erste Transmission-Gate schließt sich eine Reihenschaltung aus einem ersten und einem zweiten Inverter 16, 17 an, der ein zweites Transmission-Gate 18 parallelgeschaltet ist. Die Transmission-Gates 11, 18 und die beiden Inverter 16, 17 bilden zusammen ein erstes Speicherglied 19; vgl. durch strichpunktierte Linien umrahmter Schaltungsteil.

Zwischen den beiden Invertern 16, 17 befindet sich der Ausgang des ersten Speichergliedes, von dem eine erste Verbindung an ein drittes Transmission-Gate 20 und eine zweite Verbindung an einen Anschluß 28 eines vierten Transmission-Gates 21 führt. An das dritte Transmission-Gate 20 schließt sich eine Reihenschaltung aus einem dritten Inverter 22 und einem vierten Inverter 23 an, der ein fünftes Transmission-Gate 24 parallelgeschaltet ist. Drittes und fünftes Transmission-Gate 20, 24 bilden zusammen mit dem dritten und vierten Inverter 22, 23 ein zweites Speicherglied 25. Zwischen dem dritten und vierten Inverter 22, 23 befindet sich der Ausgang des zweiten Speichergliedes 25, der mit einem sechsten Transmission-Gate 26 verbunden ist. Ein Ausgang 27 des sechsten Transmission-Gates 26 ist erstens mit dem Ausgang 35 des vierten Transmission-Gates 21 und zweitens mit dem Ausgang 29 der gesamten Schaltungsanordnung verbunden. Die Transmission-Gates 15, 18, 20, 21, 24, 26 sind gleichartige Baustufen mit je einem nichtinvertierenden Takteingang 14 (CL)

...

- 3 -

und je einem invertierenden Takteingang 15 ($\overline{CL}$). Bei dem
vierten und sechsten Transmission-Gate 21, 26 sind die
invertierenden Takteingänge unmittelbar miteinander verbunden.

An einen zweiten Eingang 30 der Schaltungsanordnung
schließen sich ein fünfter und ein sechster Inverter 31
und 32 an. Zwischen den beiden Invertern zweigt ein erster
Taktausgang 33 ab, und der Ausgang des sechsten Inverters
bildet gleichzeitig einen zweiten Taktausgang 34. Der
erste Taktausgang 33 liefert invertierte Taktsignale für
die Takteingänge 15 der Transmission-Gates und der zweite
Taktausgang 34 nichtinvertierte Taktsignale für die Takteingänge 14.

Die Wirkungsweise der vorstehend beschriebenen Schaltung
ist folgende.

Gegeben sei eine Eingangsfrequenz $f_E$ von zum Beispiel
4,43361875 MHz, das ist die Farbträgerfrequenz des PAL-
Farbfernsehsystems. Die Eingangsfrequenz $f_E$ wird um einen
derartigen Betrag verschoben, daß sich eine Ausgangsfrequenz $f_A$ ergibt. Beträgt die Versatzfrequenz $f_V$ = 25 Hz,
so erhält man eine Ausgangsfrequenz $f_A = f_E - f_V$. Aus der
neuen Frequenz $f_A$ = 4,43359375 MHz läßt sich durch Teilung
mit dem Divisor n = 1135 die gewünschte Ausgangsfrequenz
$f_A^* = \dfrac{f_A}{1135}$ = 3906,25 Hz bilden. In dem vorliegenden Beispiel
ist die Versatzfrequenz $f_V = 4 \cdot \dfrac{f_A}{625}$.

Gemäß der in der Zeichnung dargestellten Schaltungsanordnung wird aus der Eingangsfrequenz $f_E$ eine (mittlere) Ausgangsfrequenz $f_A$ folgendermaßen gewonnen.

...

Dem ersten Eingang 10 der Schaltungsanordnung wird eine rechteckförmige Versatzspannung $U_V$ der Versatzfrequenz $f_V = 25$ Hz und dem zweiten Eingang 30 die rechteckförmige Eingangsspannung $U_E$ der Eingangsfrequenz $f_E = 4,43361875$ MHz zugeführt.

Über die Transmission-Gates 21,..26 kann der logische Zustand des ersten und des zweiten Speichergliedes 19, 25 abwechselnd auf den Ausgang 29 der Schaltungsanordnung übertragen werden. Da die Versatzfrequenz $f_V = 25$ Hz sehr viel niedriger als die Eingangsfrequenz $f_E = 4,43361875$ MHz ist, bleibt der logische Wert der rechteckförmigen Versatzspannung $U_V$ über viele Perioden der Eingangsspannung $U_E$ konstant.

Nimmt man zunächst an, daß die Transmission-Gates 11, 14, 26 leitend sind, wenn die rechteckförmige Eingangsspannung $U_E$ den logischen Wert 1 hat, dann sind die Transmission-Gates 18, 20 und 21 gesperrt. Bleibt der logische Wert W der Versatzspannung $U_V$ konstant, dann stellt sich nach einigen Perioden der Eingangsspannung $U_E$ am Ausgang des ersten Inverters 16 der invertierte logische Wert $\overline{W}$ ein, während am Ausgang des dritten Inverters 22 der nichtinvertierte logische Wert W ansteht. Über die Transmission-Gates 21, 26 liegt der Ausgang 29 der Schaltungsanordnung je nach dem logischen Wert der Eingangsspannung $U_E$ auf dem invertierten oder nichtinvertierten Wert W, $\overline{W}$, das heißt die Ausgangsfrequenz $f_A$ entspricht der Eingangsfrequenz $f_E$. Ändert die Versatzspannung $U_V$ ihren logischen Wert, so wird dieser nur in das erste Speicherglied 19 übernommen, wenn gleichzeitig die Eingangsspannung $U_E$ den logischen Wert 1 hat und der Ausgang 29 mit dem zweiten Speicherglied 25 verbunden ist.

Geht der logische Wert der Eingangsspannung $U_E$ dann auf Ø, so wird der Ausgang 29 mit dem ersten Speicherglied 19 verbunden und der Zustand des ersten Speichergliedes 19 in das zweite

...

Speicherglied übernommen. Der Ausgang 29 ist also immer mit demjenigen Speicherglied verbunden, dessen Zustand sich nicht ändern kann und darum eindeutig ist. Jede ansteigende oder abfallende Flanke der Versatzspannung $U_V$ unterdrückt eine Flanke der Eingangsspannung $U_E$. In jeder Halbperiode der Versatzspannung $U_V$ wird also eine Flanke der Eingangsspannung $U_E$ unterdrückt. Der Phasensprung der Ausgangsspannung $U_A$ findet also doppelt so häufig statt wie bei den bisherigen Schaltungsanordnungen. Außerdem ist der Phasensprung nur halb so groß. Damit hat das Korrektursignal für die PLL-Schaltung im vorliegenden Fall eine um den Faktor 4 verringerte Restwelligkeit.

10/83
EK/PLI Scht/Li
15. Juli 1983


ROBERT BOSCH GMBH, 7000 Stuttgart 1


Ansprüche


1. Digitale Schaltungsanordnung zum Erzeugen einer von einer rechteckförmigen Eingangsspannung ($U_E$) mit einer Eingangsfrequenz ($f_E$) abgeleiteten Ausgangsspannung ($U_A$) mit einer Ausgangsfrequenz ($f_A$), wobei das Verhältnis von Eingangsfrequenz zu Ausgangsfrequenz keine ganze Zahl ist, dadurch gekennzeichnet, daß die Eingangsfrequenz ($f_E$) um eine derartige Versatzfrequenz ($f_V$) verschoben wird, daß eine neue Ausgangsfrequenz $f_A = f_E - f_V$ entsteht, die durch eine ganze Zahl n teilbar ist, so daß die gewünschte Ausgangsfrequenz $f_A^* = \dfrac{f_A}{n}$ durch Teilung abgeleitet werden kann.


2. Digitale Schaltungsanordnung nach Anspruch 1, dadurch gekennzeichnet, daß die Versatzfrequenz ($f_V$) an einer Reihenschaltung aus zwei Speichergliedern (19, 25) liegt, deren logischen Zustände abwechselnd auf den Ausgang (29) der Schaltungsanordnung übertragen werden, und daß die Eingangsspannung ($U_E$) in invertierter Form und nichtinvertierter Form Takteingängen (14, 15) der Speicherglieder (19, 25) zugeführt wird.


3. Digitale Schaltungsanordnung nach Anspruch 2, dadurch gekennzeichnet, daß die Speicherglieder (19, 25) aus einem ersten Transmission-Gate (11), zwei sich daran anschließenden, in Reihe liegenden Invertern (16, 17) und einem der Reihenschaltung parallel liegenden zweiten Transmission-Gate (18) besteht, daß ein Schaltungspunkt zwischen den beiden Invertern den Ausgang des Speichergliedes bildet und daß die Transmission-Gates einen Eingang (15) für ein invertiertes und einen Eingang (14) für ein nichtinvertiertes Taktsignal zum Ansteuern mit von der Eingangsspannung ($U_E$) abgeleiteten Taktsignalen aufweisen.

...

4. Digitale Schaltungsanordnung nach Anspruch 2 oder 3,
   dadurch gekennzeichnet, daß zwischen dem Ausgang des
   zweiten Speichergliedes (25) und dem Ausgang (29) der
   Schaltungsanordnung ein sechstes Transmission-Gate
   (26) liegt, dessen invertierter Takteingang mit dem
   invertierten Takteingang eines vierten Transmission-
   Gates (21) verbunden ist, daß der Ausgang des sechsten Transmission-Gates (26) mit einem Anschluß (35)
   des vierten Transmission-Gates (21) verbunden ist und
   den Ausgang (29) der Schaltungsanordnung bildet und
   daß ein weiterer Anschluß (28) des vierten Transmission-
   Gates (21) mit dem Ausgang des ersten Speichergliedes
   (19) verbunden ist.

0131687